# EUROPÄISCHE PATENTSCHRIFT

(11) **EP 4 180 246 B1**
(45) Veröffentlichungstag und Bekanntmachung des Hinweises auf die Patenterteilung: **21.08.2024**
(21) Anmeldenummer: 22203465.4
(22) Anmeldetag: 25.10.2022
(51) Int. Cl.: B60G 11/27, B60G 11/28, F16F 9/05, F16F 9/54

(54) **ABROLLKOLBEN**
ROLLING PISTON
PISTON DÉROULEUR

(30) Priorität: 10.11.2021 DE 102021212667
(43) Veröffentlichungstag der Anmeldung: 17.05.2023
(73) Patentinhaber: ContiTech Deutschland GmbH, 30175 Hannover (DE)
(72) Erfinder: Balachonzew, Boris, 30165 Hannover (DE); Scholz, Karsten, 30165 Hannover (DE)
(74) Vertreter: Continental Corporation

(56) Entgegenhaltungen:
- EP-A1- 2 031 268
- DE-A1- 102011 050 103
- DE-A1- 102011 051 237
- US-A1- 2010 127 438
- US-A1- 2014 239 606

## Beschreibung

Die Erfindung betrifft einen Abrollkolben eines Luftfedersystems gemäß dem Oberbegriff des Anspruchs 1. Ein solcher Abrollkolben ist aus der US 2010/0127438 A1 bekannt.

### Stand der Technik

Luftfedern dieser Art sind im Stand der Technik umfassend bekannt und werden insbesondere in Fahrwerksfederungen von Fahrzeugen eingesetzt, beispielweise in Fahrwerken von Nutz- oder Schienenfahrzeugen, aber auch zur Federung von Fahrersitzen in Nutzfahrzeugen oder zur Federung von Kabinen bzw.

Fahrerkabinen gegenüber dem Fahrzeugrahmen, auch Chassis genannt.

Die Luftfedern sind in jedem Fall an eine Luftversorgung angeschlossen, üblicherweise über Schläuche und bzw. oder Luftleitungen. Die Luftversorgung erfolgt in aller Regel über einen im Fahrzeug befindlichen Druckspeicher, der mithilfe eines Kompressors befüllt wird und dann über eine Steuerung die Luftversorgung für die einzelnen Federungen bereitstellt. Oft ist die Luftfedersteuerung in die übrige Fahrzeugsteuerung mit eingebunden. Luftfedern, insbesondere Rollbalgluftfedern, besitzen in der Regel ein oberes Anschlussteil und werden damit beispielsweise am Fahrzeugrahmen befestigt. Das obere Anschlussteil gehört somit zum Luftfedersystem und muss den Luftfederbalg sicher fixieren und luftdicht abschließen. Weiterhin kann das obere Anschlussteil einen Luftanschluss zur Luftversorgung der Luftfeder umfassen. Als unteres Anschlussteil dient der sogenannte Abrollkolben, welcher fahrwerksseitig, beispielsweise an der zu federnden Achse angebunden ist. Der Abrollkolben ist in Folge einer Einfederbewegung des Rades relativ zu dem oberen Anschlussteil beweglich, sodass der Luftfederbalg unter Ausbildung einer Rollfalte auf dem Außenumfang des Abrollkolbens abrollt. Oberes Anschlussteil, Abrollkolben und Luftfederbalg bilden einen gegenüber der Umgebung abgeschlossenen und luftdichten Hohlraum. Dies gilt vergleichbar für die Verwendung von Luftfedern zur Federung von Fahrersitzen in Nutzfahrzeugen oder zur Federung von Kabinen. Die Krafteinleitung erfolgt im oben genannten Beispiel vom Fahrzeugrahmen über das obere Anschlussbauteil der Luftfeder in den Abrollkolben. Der Abrollkolben überträgt die gesamte Kraft auf die zu federnde Achse. Die Kraftübertragung kann ebenso in entgegengesetzter Richtung erfolgen.

Aus Gründen der Gewichtsreduktion und der Vermeidung von Korrosionsbefall sind aus dem Stand der Technik Lösungen bekannt, bei denen das obere und das untere Anschlussteil, die üblicher Weise aus metallischen Werkstoffen gefertigt sind, durch Kunststoffbauteile ersetzt werden.

Die DE 10 2017 222 128 A1 offenbart eine Luftfeder mit einem einen Luftanschluss aufweisenden Anschlussteil, wobei der Luftanschluss als ein form- und stoffschlüssig im Kunststoff eingebettetes Luftanschlussbauteil ausgebildet ist.

Die DE 10 2011 050 103 A1 offenbart einen Abrollkolben für einen Luftfederrollbalg aus Kunststoff. Der Abrollkolben umfasst eine Stütze für einen im Wesentlichen in Achsrichtung der Luftfeder wirkenden Anschlagpuffer, die aus zwei zusammenwirkenden Teilen besteht. Der rohrförmige Innenraum der Stützenteile ist hierbei mit rippenartigen Versteifungselementen ausgesteift.

Der Abrollkolben der DE 10 2011 050 103 A1 umfasst eine Stütze sowie ein am Kolbenboden zusätzliches Versteifungselement zur verbesserten Aufnahme von Querkräften. Abhängig vom Einsatzgebiet der Luftfeder werden nicht alle Komponenten, wie beispielsweise die Stütze, zur Erfüllung der technischen Grundfunktion eines Abrollkolbens benötigt.

Nachteiliger Weise führt die Stütze als zusätzliches Bauteil zu einem zusätzlichen Gewicht und bzw. oder erfordert einen zusätzlichen Bauraum, was beides eigentlich nicht gewollt ist, wie zuvor bereits erwähnt.

Ein weiterer Nachteil besteht darin, dass eine hohe Anzahl an Bauteilen die Komplexität und bzw. oder die Kosten in der Herstellung und erhöht.

Häufig wird die Auflagefläche des Kolbenbodens an den damit verbundenen Bauteilen nicht über die komplette Oberfläche des Kolbenbodens gebildet. Durch eine kleine Auflagefläche können hohe punktuelle Belastungen an dem Kolbenboden auftreten. Dies kann zu einer ungleichmäßigen mechanischen Spannungsverteilung innerhalb des Abrollkolbens führen. Die Wandstärke des Abrollkolbens muss entsprechend groß ausgelegt werden, um den beschriebenen mechanischen Spannungen standhalten zu können. Daraus ergibt sich nachteiliger Weise ein hoher Materialaufwand, der ein hohes Bauteilgewicht und hohe Bauteilkosten nach sich zieht.

### Aufgabe

Der Erfindung liegt die Aufgabe zugrunde, einen Abrollkolben bereitzustellen, bei dem bei vorgegebener Last auch bei einer kleinen Auflagefläche des Kolbenbodens an den mit dem Abrollkolben verbundenen Bauteilen eine gleichmäßigere Spannungsverteilung vorherrscht. Außerdem soll der Abrollkolben mit einer für die Funktion innerhalb eines Luftfedersystems minimal erforderlichen Anzahl von Bauteilen bereitgestellt werden.

Übergeordnete Aufgabe ist es also, einen Abrollkolben mit geringstmöglichen Materialeinsatz und geringstmöglichem Gewicht kostengünstig bereitzustellen.

### Lösung der Aufgabe

Die Lösung dieser Aufgabe ergibt sich durch einen Abrollkolben mit den Merkmalen des Hauptanspruchs.

Anspruch 12 betrifft ein Luftfedersystem mit einem erfindungsgemäßen Abrollkolben.

Anspruch 13 betrifft ein Kraftfahrzeug, insbesondere einen Lastkraftwagen mit einer erfindungsgemäßen Luftfeder.

Weitere vorteilhafte Ausbildungen sind in den abhängigen Ansprüchen offenbart.

### Vorteile der Erfindung

Der in dem Anspruch 1 offenbarte erfindungsgemäße Abrollkolben eines Luftfedersystems umfasst ein topfförmiges Kolbenunterteil, wobei das Kolbenunterteil einen Kolbenboden mit einer Auflagefläche und eine rotationssymmetrische Kolbenwandung aufweist. Weiterhin umfasst der Abrollkolben ein mit dem Kolbenunterteil luftdicht verbundenes und an die Kolbenwandung anschließendes, als Deckel ausgebildetes Kolbenoberteil, wobei mehrere rippenartige Versteifungselemente zwischen dem Kolbenboden und der Kolbenwandung rotationssymmetrisch in radialer Richtung, insbesondere strahlenförmig zu einer normal zum Kolbenboden verlaufenden Längsachse angeordnet sind. Die rippenartigen Versteifungselemente weisen eine erste Seitenfläche und eine zweite Seitenfläche auf, wobei das Kolbenoberteil einen Flansch und eine Zarge aufweist. Die Zarge ragt in Richtung vom Kolbenboden weg, axial aus dem Flansch um ein vorbestimmtes Maß heraus.

Die Erfindung ist dadurch gekennzeichnet, dass der Kolbenboden eine umlaufende Sicke aufweist, die in radialer Richtung rotationssymmetrisch angeordnet ist und einen vorbestimmten Radius aufweist.

Mit anderen Worten gesagt ist der Abrollkolben zweiteilig ausgebildet, nämlich aus einem Kolbenunterteil und einem Kolbenoberteil. Das Kolbenunterteil weist einen Kolbenboden und eine Kolbenwandung auf. Die Kolbenwandung ist an ihrem innenliegenden Durchmesser durch rippenartige Versteifungselemente an dem Kolbenboden abgestützt und verleiht dem Kolbenunterteil somit eine höhere Stabilität. Im Vergleich zu einem Vollkörper kann durch die rippenartigen Versteifungselemente eine vergleichbare Steifigkeit bei gleichzeitig geringerem Materialeinsatz und einer daraus folgenden Gewichtsreduktion erzielt werden. Der Kolbenboden weist eine Auflagefläche auf, an der ein mit dem Kolbenboden verbundenes Bauteil flächig anliegen kann. Bei einer Fahrzeuganwendung kann die Anbindung des Abrollkolbens fahrwerksseitig, beispielsweise an einer zu federnden Achse erfolgen. Die auftretenden Federkräfte werden im Wesentlichen in axialer Richtung des Abrollkolbens durch die gegeneinander abzufedernden und mit dem Abrollkolben verbundenen Bauteile über das Kolbenoberteil eingeleitet und durch den Abrollkolben hindurch in den Kolbenboden geleitet, oder umgekehrt. Der Kolbenboden muss daher besonders stabil und belastungsfähig sein. Bei Krafteinleitung in den Kolbenboden über eine kleine Auflagefläche kann es vorkommen, dass der Kolbenboden aufgrund hoher lokaler mechanischer Spannungen im Bereich der Auflagefläche in axialer Richtung elastisch verformt wird. Durch eine lokale elastische Verformung können im Kolbenboden dort erhöhte Scherspannungen auftreten.

Die erfindungsgemäße rotationssymmetrische Sicke bildet mit anderen Worten gesagt, im Querschnitt des Abrollkolbens betrachtet, einen wellenförmigen Verlauf des Kolbenbodens. Die Sicke ist von außerhalb betrachtet als eine durch einen Radius gebildete und nach innen gewölbte, konkave Kontur wahrnehmbar. Durch Variation von Höhe und Radius der Sicke kann der Kolbenboden auf die verschiedenen Spannungszustände individuell angepasst werden.

Durch die rotationssymmetrische Sicke können die zuvor beschriebenen Scherspannungen auf besonders vorteilhafte Weise in Druckspannungen umgewandelt werden. Die Druckspannungen folgen dem Verlauf der Kontur des Kolbenbodens, liegen mit anderen Worten gesagt also in der Ebene des Kolbenbodens, wodurch ein optimaler Spannungsverlauf und eine gleichmäßigere Spannungsverteilung innerhalb des Kolbenbodens erfolgen kann.

Die erfindungsgemäße Lösung ermöglicht auf vorteilhafte Weise, auch bei kleiner Auflagefläche des Kolbenbodens, eine gleichmäßige Spannungsverteilung im Kolbenboden sicherzustellen, sodass lokale Spannungsspitzen vermieden werden können. So kann einer lokalen Überbelastung des Abrollkolbens vorgebeugt werden. Außerdem kann der Kolbenboden mit geringerer Wandstärke gefertigt werden, wodurch der Materialeinsatz verringert werden kann. Ein geringerer Materialeinsatz kann wiederum zu einer Kosteneinsparung in der Herstellung des Abrollkolbens führen. Außerdem kann der Abrollkolben durch den geringen Materialeinsatz besonders leicht ausgebildet sein. Durch Gewichtseinsparung einzelner Bauteile kann bei Nutzfahrzeugen beispielsweise die Nutzlast erhöht werden, woraus Flottenbetreiber oder Spediteure wirtschaftliche Vorteile generieren können.

Gemäß einem weiteren Aspekt der vorliegenden Erfindung begrenzt die Sicke die Auflagefläche in radialer Richtung.

So kann auf besonders vorteilhafte Weise in dem Bereich der Auflagefläche, in dem die Scherspannungen auftreten, eine gezielte Umleitung der Scherspannung in die Druckspannung erfolgen.

Mit anderen Worten gesagt kann durch eine definierte Position der Sicke am Rande der Auflagefläche eines mit dem Kolbenboden verbundenen Bauteils die Spannungsverteilung im Kolbenboden nochmals optimiert werden.

Gemäß einem weiteren Aspekt der vorliegenden Erfindung verbindet ein Übergangselement den Kolbenboden mit der ersten Seitenfläche und der zweiten Seitenfläche der rippenartigen Versteifungselemente.

Mit anderen Worten gesagt sind die rippenartigen Versteifungselemente über die erste Seitenfläche und die zweite Seitenfläche mit dem Kolbenboden verbunden. Die Verbindung erfolgt über ein Übergangselement, wobei das Übergangselement aus demselben Material wie das des Kolbenbodens und der rippenartigen Versteifungselemente gebildet sein kann. Das Übergangselement kann konvex oder als Schräge geformt sein. Das Übergangselement kann in einem verdickten Bereich des rippenartigen Versteifungselementes münden.

Durch das Übergangselement können die mechanischen Spannungen auf vorteilhafte Weise aus dem Kolbenboden gleichmäßig in die rippenartigen Versteifungselemente geleitet werden, oder umgekehrt.

Gemäß einem weiteren Aspekt der vorliegenden Erfindung sind die rippenartigen Versteifungselemente jeweils mit mindestens einem Querversteifungselement mit dem Kolbenboden verbunden. Durch die Querversteifungselemente kann auf vorteilhafte Weise erreicht werden, dass die rippenartigen Versteifungselemente in Umfangsrichtung seitlich abgestützt werden. Weiterhin können die mechanischen Spannungen auf vorteilhafte Weise aus dem Kolbenboden gleichmäßig über die Querversteifungselemente in die rippenartigen Versteifungselemente geleitet werden, oder umgekehrt. Die Querversteifungselemente können außerdem zusätzlich über das Übergangselement mit den Seitenflächen der rippenartigen Versteifungselemente verbunden sein.

Gemäß einem weiteren Aspekt der vorliegenden Erfindung ist das mindestens eine Querversteifungselement mit der ersten Seitenfläche eines ersten Versteifungselementes, mit dem Kolbenboden und mit der zweiten Seitenfläche eines zweiten Versteifungselementes verbunden, wobei das zweite Versteifungselement zu dem ersten Versteifungselement in Umfangsrichtung benachbart angeordnet ist. Mit anderen Worten gesagt verbindet das Querversteifungselement zwei benachbarte rippenartige Versteifungselemente mit dem Boden, wobei das jeweilige rippenartige Versteifungselement mit mindestens einer der Seitenflächen an ein Querversteifungselement angebunden ist. Durch die gegenseitige Abstützung der rippenartigen Versteifungselemente untereinander kann eine besonders große Steifigkeit des Abrollkolbens gewährleistet werden. Außerdem können die Spannungen der rippenartigen Versteifungselemente durch das Querversteifungselement großflächig in den Kolbenboden eingeleitet werden, oder umgekehrt, wodurch lokale Spannungsspitzen vermieden werden können. Der Kolbenboden kann dank der gleichmäßigen Spannungsverteilung mit einer geringeren Wandstärke ausgebildet sein, was den Materialbedarf und somit die Materialkosten, sowie das Gewicht des Abrollkolbens senken kann.

Gemäß einem weiteren Aspekt der vorliegenden Erfindung ist der Abrollkolben aus Kunststoff ausgebildet. Die zuvor erläuterten Vorteile lassen sich so auf besonders leichte Konstruktionen aus Kunststoff übertragen, die durch die erfindungsgemäße Lösung nun auch höheren Belastungen standhalten können.

Gemäß einem weiteren Aspekt der vorliegenden Erfindung ist die luftdichte Verbindung zwischen Kolbenunterteil und Kolbenoberteil als Schweißverbindung ausgebildet. Durch die stoffschlüssige Verbindung von Kolbenoberteil und Kolbenunterteil kann eine besonders gleichmäßige Spannungsverteilung im Bauteil sichergestellt werden.

Gemäß einem weiteren Aspekt der vorliegenden Erfindung ist die luftdichte Verbindung zwischen Kolbenunterteil und Kolbenoberteil als Schraubverbindung ausgebildet. Diese Ausbildung kann insbesondere bei Nutzung des Innenvolumens des Abrollkolbens und darin angeordneten Komponenten, beispielsweise Sensoren, vorteilhaft sein, da durch die Lösbare Verbindung zwischen Kolbenunterteil und Kolbenoberteil ein leichter Zugang zum Innenvolumen des Abrollkolbens erfolgen kann.

Gemäß einem weiteren Aspekt der vorliegenden Erfindung ist die luftdichte Verbindung zwischen Kolbenunterteil und Kolbenoberteil als Klebeverbindung ausgebildet. Durch die stoffschlüssige Verbindung von Kolbenoberteil und Kolbenunterteil kann eine besonders gleichmäßige Spannungsverteilung im Bauteil sichergestellt werden. Klebeverbindungen können zudem auch bei kleinen Stückzahlen besonders kostengünstig realisiert werden, da zumeist keine speziellen Vorrichtungen für die Fertigung erforderlich sind.

Gemäß einem weiteren Aspekt der vorliegenden Erfindung weist der Kolbenboden mindestens ein Verbindungselement zum Anschluss des Abrollkolbens an einem Fahrwerk oder einer Karosserie auf. Der Abrollkolben kann so auf vorteilhafte Weise in verschiedener Ausrichtung an einem Kraft- oder Schienenfahrzeug angebunden werden. Mit anderen Worten gesagt kann der Kolbenboden sowohl an dem Fahrwerk als auch an der Karosserie eines Kraft- oder Schienenfahrzeugs angebunden werden.

Gemäß einem weiteren Aspekt der vorliegenden Erfindung ist das Verbindungselement als eine in das Kunststoffmaterial eingespritzte metallische Gewindebuchse oder als ein eingespritzter metallischer Gewindebolzen ausgebildet. Diese Verbindungselemente sind besonders kostengünstig erhältlich und lassen sich konstruktiv und prozesstechnisch einfach in den erfindungsgemäßen Abrollkolben integrieren.

Die vorliegende Erfindung betrifft außerdem ein Luftfedersystem mit einem erfindungsgemäßen Abrollkolben. Die zuvor beschriebenen Vorteile lassen sich so auf beliebige Luftfedersysteme übertragen.

Die vorliegende Erfindung betrifft außerdem ein Kraftfahrzeug, insbesondere Lastkraftwagen mit einem erfindungsgemäßen Luftfedersystem. Die zuvor beschriebenen Vorteile des Luftfedersystems mit dem erfindungsgemäßen Abrollkolben lassen sich so auf Kraftfahrzeuganwendungen übertragen. Das durch die erfindungsgemäße Lösung einsparbare Gewicht ist insbesondere bei Anwendungen für Lastkraftwagen von besonders großem Vorteil, da so die Nutzlast des Lastkraftwagens erhöht werden kann.

### Erläuterung Figuren

Anhand der Zeichnungen wird im Folgenden ein Ausführungsbeispiel der Erfindung näher erläutert.
Fig. 1 zeigt die Schnittdarstellung einer Rollbalgluftfeder in der Seitenansicht mit einem erfindungsgemäßen Abrollkolben.
Fig. 2 zeigt einen erfindungsgemäßen Abrollkolben in einer Schnittdarstellung der Seitenansicht.
Fig. 3 zeigt die Schnittdarstellung der Fig. 2 in vergrößerter Darstellung von in Zeichnungslage schräg unten gesehen.
Fig. 4 zeigt einen erfindungsgemäßen Abrollkolben in der Draufsicht.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung. Die Längsachse X, die radiale Richtung R und die Umfangsrichtung können gemeinsam auch als Raumrichtungen bzw. als zylindrische Raumrichtungen bezeichnet werden.

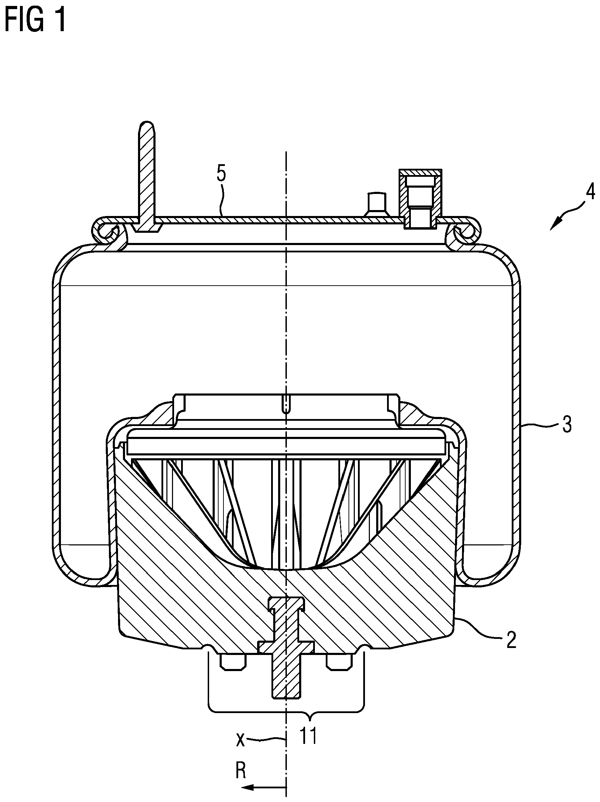

Fig. 1 zeigt die Schnittdarstellung eines Luftfedersystems 4 mit einer Rollbalgluftfeder und einem erfindungsgemäßen Abrollkolben 2 in der Seitenansicht. Der Abrollkolben 2 ist mit einem Balg 3 der Luftfeder im Bereich von Flansch und Zarge luftdicht verbunden. Bei einer Relativbewegung des Abrollkolbens 2 und einer Kopfplatte 5 aufeinander zu, rollt der Luftfederbalg 3 auf dem Außenumfang des Abrollkolbens 2 unter Ausbildung einer Rollfalte ab. Der Abrollkolben 2 ist in radialer Richtung R rotationssymmetrisch zu einer Längsachse X ausgebildet. Der Abrollkolben 2 weist eine Auflagefläche 11 auf. Die Auflagefläche 11 steht in Kontakt mit einem mit dem Abrollkolben 2 verbundenen Bauteil.

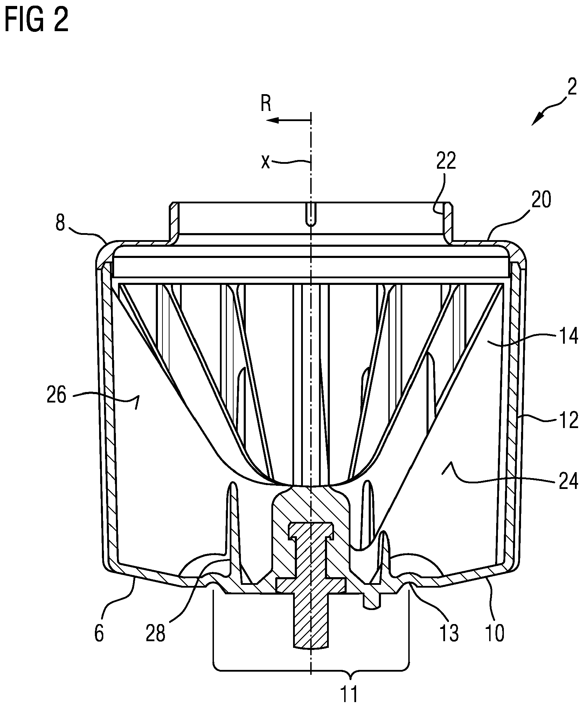

Fig. 2 zeigt eine beispielhafte Ausbildung eines erfindungsgemäßen Abrollkolbens 2 in einer Schnittdarstellung in der Seitenansicht. Der Abrollkolben 2 ist zweiteilig ausgebildet und weist als erstes Teil ein topfförmiges Kolbenunterteil 6 auf, welches einen Kolbenboden 10 und eine rotationssymmetrische Kolbenwandung 12 umfasst. Den zweiten Teil bildet ein Kolbenoberteil 8. Zwischen dem Kolbenboden 10 und der Kolbenwandung 12 sind Versteifungselemente 14 in radialer Richtung R rotationssymmetrisch zu der normal zum Kolbenboden 10 verlaufenden Längsachse X angeordnet. Das Kolbenoberteil 8 weist einen Flansch 20 und eine axial aus dem Flansch 20 um ein vorbestimmtes Maß herausragende Zarge 22 auf. Flansch 20 und Zarge 22 dienen zur Fixierung des Balgs 3 an dem Abrollkolben 2. Die rippenartigen Versteifungselemente 14 weisen eine erste Seitenfläche 24 und eine zweite Seitenfläche 26 auf. Zwischen dem Kolbenboden 10 und der ersten Seitenfläche 24 eines ersten Versteifungselementes 14 und dem Kolbenboden 10 und der zweiten Seitenfläche 26 eines zweiten und dem ersten Versteifungselement 14 benachbarten Versteifungselementes 14 ist ein Querversteifungselement 28 angeordnet. Jedes der Versteifungselemente 14 steht mit einem Querversteifungselement 28 in Kontakt. Mit anderen Worten gesagt ist in diesem Ausführungsbeispiel in jeder zweiten der durch zwei Versteifungselemente 14 dazwischen gebildeten Lücke ein Querversteifungselement 28 angeordnet. Das Querversteifungselement 28 stützt die einander jeweils benachbarten Versteifungselemente 14 untereinander ab. Außerdem werden die Spannungen der rippenartigen Versteifungselemente 14 durch das Querversteifungselement 28 großflächig in den Kolbenboden 10 eingeleitet, oder umgekehrt, wodurch lokale Spannungsspitzen vermieden werden.

Bei Krafteinleitung in den Kolbenboden 10 über die Auflagefläche 11 kann es vorkommen, dass der Kolbenboden 10 aufgrund hoher lokaler mechanischer Spannungen im Bereich der Auflagefläche 11 in Längsrichtung X elastisch verformt wird. Durch eine lokale elastische Verformung können im Kolbenboden 10 Scherspannungen auftreten. Der Kolbenboden 10 weist eine rotaionssymmetrische Sicke 13 auf. Durch die rotationssymmetrische Sicke 13 können die zuvor beschriebenen Scherspannungen auf besonders vorteilhafte Weise in Druckspannungen umgewandelt werden. Die Druckspannungen folgen dem Verlauf der Kontur des Kolbenbodens 10, wodurch ein optimaler Spannungsverlauf und eine gleichmäßige Spannungsverteilung innerhalb des Kolbenbodens 10 erfolgen kann. Die Sicke 13 des Kolbenbodens 10 bildet im Querschnitt des Abrollkolbens 2 betrachtet einen wellenförmigen Verlauf des Kolbenbodens 10. Die Sicke 13 ist von außerhalb betrachtet als eine durch einen Radius gebildete und nach innen gewölbte, konkave Kontur wahrnehmbar.

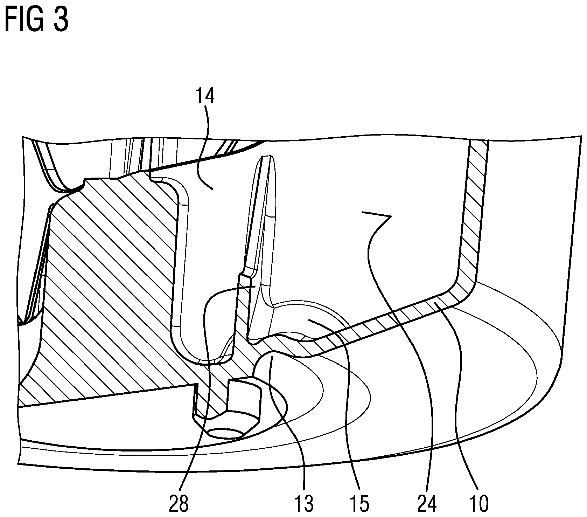

Fig. 3 zeigt die Schnittdarstellung der Fig. 2 in vergrößerter Darstellung aus einer Perspektive von schräg unten. Insbesondere zeigt die Fig. 3 eine vergrößerte Darstellung des Querversteifungselementes 28, der Sicke 13 und eines Übergangselementes 15. Das dargestellte Übergangselement 15 verbindet den Kolbenboden 10 mit der ersten Seitenfläche 24 des rippenartigen Versteifungselements 14. In der Schnittdarstellung nicht dargestellt ist die Verbindung des Übergangselementes 15 mit der zweiten Seitenfläche 26 des rippenartigen Versteifungselementes 14. Das Übergangselement 15 ist als konvexe Kontur in einem Übergangsbereich zwischen Kolbenboden 10 und den Seitenflächen 24, 26 ausgebildet. Weiterhin verbindet das Übergangselement 15 das Querversteifungselement 28 mit den Seitenflächen 24, 26 des rippenartigen Versteifungselementes 14. Durch das Übergangselement 15 können die mechanischen Spannungen aus dem Kolbenboden 10 und dem Querversteifungselement 28 gleichmäßig in das rippenartige Versteifungselement 14 geleitet werden, oder umgekehrt.

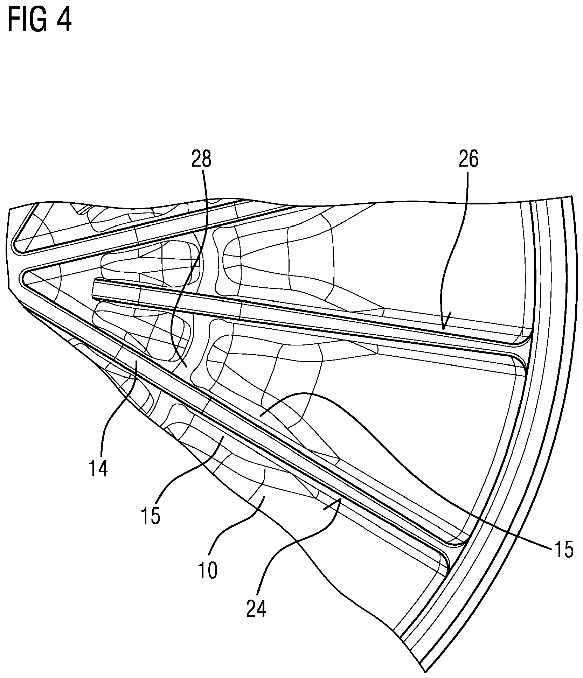

Fig. 4 zeigt einen erfindungsgemäßen Abrollkolben in der Draufsicht. Es wird hierbei auf die Beschreibung der vorherigen Figuren verwiesen. Insbesondere veranschaulicht die Fig. 4 die Anordnung und den Verlauf des Übergangselementes 15 zwischen linker und rechter Seitenfläche 24, 26 der rippenartigen Versteifungselemente 14, dem Kolbenboden 10 und den Querversteifungselementen 28.

### Bezugszeichenliste (Teil der Beschreibung)

- 2: Abrollkolben
- 3: Balg
- 4: Luftfedersystem
- 5: Kopfplatte
- 6: Kolbenunterteil
- 8: Kolbenoberteil
- 10: Kolbenboden
- 11: Auflagefläche
- 12: Kolbenwandung
- 13: Sicke
- 14: Versteifungselement
- 15: Übergangselement
- 20: Flansch
- 22: Zarge
- 24: Erste Seitenfläche
- 26: Zweite Seitenfläche
- 28: Querversteifungselement

- X: Längsachse
- R: radiale Richtung

## Patentansprüche

1. Abrollkolben (2) eines Luftfedersystems (4),
umfassend
ein topfförmiges Kolbenunterteil (6),
wobei das Kolbenunterteil (6) einen Kolbenboden (10) mit einer Auflagefläche (11) und eine rotationssymmetrische Kolbenwandung (12) aufweist,
ein mit dem Kolbenunterteil (6) luftdicht verbundenes und an die Kolbenwandung (12) anschließendes, als Deckel ausgebildetes Kolbenoberteil (8),
wobei mehrere rippenartige Versteifungselemente (14) zwischen dem Kolbenboden (10) und der Kolbenwandung (12) in radialer Richtung (R) rotationssymmetrisch, insbesondere strahlenförmig zu einer normal zum Kolbenboden (10) verlaufenden Längsachse (X) angeordnet sind,
wobei die rippenartigen Versteifungselemente (14) eine erste Seitenfläche (24) und eine zweite Seitenfläche (26) aufweisen,
wobei das Kolbenoberteil (8) einen Flansch (20) und eine Zarge (22) aufweist,
wobei die Zarge (22) in Richtung vom Kolbenboden (10) weg, axial aus dem Flansch (20) um ein vorbestimmtes Maß herausragt,
**dadurch gekennzeichnet, dass**
der Kolbenboden (10) eine umlaufende Sicke (13) aufweist, die in radialer Richtung (R) rotationssymmetrisch angeordnet ist und einen vorbestimmten Radius aufweist.

2. Abrollkolben (2) nach Anspruch 1,
**dadurch gekennzeichnet, dass**
die Sicke (13) die Auflagefläche (11) in radialer Richtung (R) begrenzt.

3. Abrollkolben (2) nach einem der vorhergehenden Ansprüche,
**dadurch gekennzeichnet, dass**
ein Übergangselement (15) den Kolbenboden (10) mit der ersten Seitenfläche (24) und der zweiten Seitenfläche (26) der rippenartigen Versteifungselemente (14) verbindet.

4. Abrollkolben (2) nach einem der vorhergehenden Ansprüche,
**dadurch gekennzeichnet, dass**
die rippenartigen Versteifungselemente (14) jeweils mit mindestens einem Querversteifungselement (28) mit dem Kolbenboden (10) verbunden sind.

5. Abrollkolben (2) nach Anspruch 4,
**dadurch gekennzeichnet, dass**
das mindestens eine Querversteifungselement (28) mit der ersten Seitenfläche (24) eines ersten Versteifungselementes (14), mit dem Kolbenboden (10) und mit der zweiten Seitenfläche (26) eines zweiten Versteifungselementes (14) verbunden ist,
wobei das zweite Versteifungselement (14) zu dem ersten Versteifungselement (14) in Umfangsrichtung benachbart angeordnet ist.

6. Abrollkolben (2) nach einem der vorhergehenden Ansprüche,
**dadurch gekennzeichnet, dass**
der Abrollkolben (2) aus Kunststoff ausgebildet ist.

7. Abrollkolben (2) nach einem der vorhergehenden Ansprüche,
**dadurch gekennzeichnet, dass**
die luftdichte Verbindung zwischen Kolbenunterteil (6) und Kolbenoberteil (8) als Schweißverbindung ausgebildet ist.

8. Abrollkolben (2) nach einem der vorhergehenden Ansprüche,
**dadurch gekennzeichnet, dass**
die luftdichte Verbindung zwischen Kolbenunterteil (6) und Kolbenoberteil (8) als Schraubverbindung ausgebildet ist.

9. Abrollkolben (2) nach einem der vorhergehenden Ansprüche,
**dadurch gekennzeichnet, dass**
die luftdichte Verbindung zwischen Kolbenunterteil (6) und Kolbenoberteil (8) als Klebeverbindung ausgebildet ist.

10. Abrollkolben (2) nach einem der vorhergehenden Ansprüche,
**dadurch gekennzeichnet, dass**
der Kolbenboden (10) mindestens ein Verbindungselement zum Anschluss des Abrollkolbens (2) an einem Fahrwerk oder einer Karosserie aufweist.

11. Abrollkolben (2) nach Anspruch 10,
**dadurch gekennzeichnet, dass**
das Verbindungselement als eine in das Kunststoffmaterial eingespritzte metallische Gewindebuchse oder als ein eingespritzter metallischer Gewindebolzen ausgebildet ist.

12. Luftfedersystem (4) mit einem Abrollkolben (2) nach einem der vorhergehenden Ansprüche.

13. Kraftfahrzeug, insbesondere Lastkraftwagen mit einem Luftfedersystem (4) nach Anspruch 12.

## Claims

1. Rolling piston (2) of an air spring system (4),
comprising
a pot-shaped piston lower part (6),
wherein the piston lower part (6) has a piston head (10) with a bearing surface (11) and has a rotationally symmetrical piston wall (12),
a piston upper part (8) in the form of a cover, which is connected in an air-tight manner to the piston lower part (6) and adjoins the piston wall (12),
wherein multiple rib-like stiffening elements (14) are arranged rotationally symmetrically in a radial direction (R), in particular in a radiating manner with respect to a longitudinal axis (X) extending normal to the piston head (10), between the piston head (10) and the piston wall (12),
wherein the rib-like stiffening elements (14) have a first side surface (24) and a second side surface (26),
wherein the piston upper part (8) has a flange (20) and a skirt (22),
wherein the skirt (22) protrudes axially from the flange (20) by a predetermined extent in the direction away from the piston head (10),
**characterized in that**
the piston head (10) has a peripheral bead (13) which is arranged rotationally symmetrically in the radial direction (R) and which has a predetermined radius.

2. Rolling piston (2) according to Claim 1,
**characterized in that**
the bead (13) delimits the bearing surface (11) in the radial direction (R).

3. Rolling piston (2) according to one of the preceding claims,
**characterized in that**
a transition element (15) connects the piston head (10) to the first side surface (24) and the second side surface (26) of the rib-like stiffening elements (14).

4. Rolling piston (2) according to one of the preceding claims,
**characterized in that**
the rib-like stiffening elements (14) are each connected to the piston head (10) by at least one transverse stiffening element (28).

5. Rolling piston (2) according to Claim 4,
**characterized in that**
the at least one transverse stiffening element (28) is connected to the first side surface (24) of a first stiffening element (14), to the piston head (10) and to the second side surface (26) of a second stiffening element (14),
wherein the second stiffening element (14) is arranged adjacent to the first stiffening element (14) in a circumferential direction.

6. Rolling piston (2) according to one of the preceding claims,
**characterized in that**
the rolling piston (2) is formed from plastic.

7. Rolling piston (2) according to one of the preceding claims,
**characterized in that**
the air-tight connection between piston lower part (6) and piston upper part (8) is in the form of a welded connection.

8. Rolling piston (2) according to one of the preceding claims,
**characterized in that**
the air-tight connection between piston lower part (6) and piston upper part (8) is in the form of a screw connection.

9. Rolling piston (2) according to one of the preceding claims,
**characterized in that**
the air-tight connection between piston lower part (6) and piston upper part (8) is in the form of an adhesive connection.

10. Rolling piston (2) according to one of the preceding claims,
**characterized in that**
the piston head (10) has at least one connecting element for connection of the rolling piston (2) to a chassis or to a body.

11. Rolling piston (2) according to Claim 10,
**characterized in that**
the connecting element is in the form of a metallic threaded sleeve injection-moulded into the plastic material or is in the form of an injection-moulded metallic threaded bolt.

12. Air-spring system (4) having a rolling piston (2) according to one of the preceding claims.

13. Motor vehicle, in particular heavy goods vehicle, having an air-spring system (4) according to Claim 12.

## Revendications

1. Piston dérouleur (2) d'un système de suspension pneumatique (4),
comprenant
une partie inférieure de piston en forme de pot (6),
la partie inférieure de piston (6) présentant un fond de piston (10) avec une surface d'appui (11) et une paroi de piston (12) à symétrie de révolution,
une partie supérieure de piston (8) reliée de manière étanche à l'air à la partie inférieure de piston (6) et se raccordant à la paroi de piston (12), réalisée sous forme de couvercle,
plusieurs éléments de renforcement (14) en forme de nervure étant agencés entre le fond de piston (10) et la paroi de piston (12) dans la direction radiale (R) avec une symétrie de révolution, notamment en forme de rayons par rapport à un axe longitudinal (X) s'étendant normalement au fond de piston (10),
les éléments de renforcement en forme de nervure (14) présentant une première surface latérale (24) et une deuxième surface latérale (26),
la partie supérieure du piston (8) présentant une bride (20) et une jupe (22),
la jupe (22) faisant saillie axialement hors de la bride (20) d'une mesure prédéterminée dans la direction opposée au fond de piston (10),
**caractérisé en ce que**
le fond de piston (10) présente une moulure périphérique (13) qui est agencée à symétrie de révolution dans la direction radiale (R) et qui présente un rayon prédéterminé.

2. Piston dérouleur (2) selon la revendication 1,
**caractérisé en ce que**
la moulure (13) délimite la surface d'appui (11) dans la direction radiale (R).

3. Piston dérouleur (2) selon l'une quelconque des revendications précédentes,
**caractérisé en ce que**
un élément de transition (15) relie le fond de piston (10) à la première surface latérale (24) et à la deuxième surface latérale (26) des éléments de renforcement en forme de nervure (14).

4. Piston dérouleur (2) selon l'une quelconque des revendications précédentes,
**caractérisé en ce que**
les éléments de renforcement en forme de nervure (14) sont reliés chacun au fond de piston (10) par au moins un élément de renforcement transversal (28).

5. Piston dérouleur (2) selon la revendication 4,
**caractérisé en ce que**
l'au moins un élément de renforcement transversal (28) est relié à la première surface latérale (24) d'un premier élément de renforcement (14), au fond de piston (10) et à la deuxième surface latérale (26) d'un deuxième élément de renforcement (14),
le deuxième élément de renforcement (14) étant agencé de manière voisine du premier élément de renforcement (14) dans la direction périphérique.

6. Piston dérouleur (2) selon l'une quelconque des revendications précédentes,
**caractérisé en ce que**
le piston de déroulement (2) est réalisé en matière plastique.

7. Piston dérouleur (2) selon l'une quelconque des revendications précédentes,
**caractérisé en ce que**
la liaison étanche à l'air entre la partie inférieure de piston (6) et la partie supérieure de piston (8) est réalisée sous forme de liaison soudée.

8. Piston dérouleur (2) selon l'une quelconque des revendications précédentes,
**caractérisé en ce que**
la liaison étanche à l'air entre la partie inférieure de piston (6) et la partie supérieure de piston (8) est réalisée sous forme de liaison par vis.

9. Piston dérouleur (2) selon l'une quelconque des revendications précédentes,
**caractérisé en ce que**
la liaison étanche à l'air entre la partie inférieure de piston (6) et la partie supérieure de piston (8) est réalisée sous forme de liaison adhésive.

10. Piston dérouleur (2) selon l'une quelconque des revendications précédentes,
**caractérisé en ce que**
le fond de piston (10) présente au moins un élément de liaison pour le raccordement du piston de roulement (2) à un châssis ou à une carrosserie.

11. Piston dérouleur (2) selon la revendication 10,
**caractérisé en ce que**
l'élément de liaison est réalisé sous la forme d'une douille filetée métallique injectée dans le matériau plastique ou sous la forme d'un boulon fileté métallique injecté.

12. Système de suspension pneumatique (4) avec un piston dérouleur (2) selon l'une quelconque des revendications précédentes.

13. Véhicule automobile, notamment camion avec un système de suspension pneumatique (4) selon la revendication 12.
